(19) Europäisches Patentamt
European Patent Office
Office européen des brevets

(11) **EP 1 773 069 A2**

(12) **EUROPEAN PATENT APPLICATION**

(43) Date of publication:
**11.04.2007 Bulletin 2007/15**

(51) Int Cl.:
*H04N 7/34* (2006.01)    *H04N 7/50* (2006.01)

(21) Application number: **06120140.6**

(22) Date of filing: **05.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.09.2005 KR 20050088320**

(71) Applicant: **Samsung Electronics Co., Ltd**
**Suwon-si, Gyeonggi-do 442-742 (KR)**

(72) Inventors:
• **KIM, So-Young**
**Gyeonggi-do (KR)**

• **PARK, Jeong-hoon**
**Seoul (KR)**
• **SOHN, Yu-mi**
**Gyeonggi-do (KR)**
• **Lee, Sang-rae**
**Gyeonggi-do (KR)**

(74) Representative: **Brandon, Paul Laurence**
**APPLEYARD LEES**
**15 Clare Road**
**Halifax HX1 2HY (GB)**

(54) **Apparatus, method and recording medium for video encoding/decoding**

(57)    An apparatus and a method for video prediction encoding and decoding to improve video compression efficiency are provided. A video encoding method includes dividing an input video into a plurality of sub-planes, generating a reference sub-plane based on the divided sub-planes, performing intraprediction on the generated reference sub-plane, and performing interprediction on the divided sub-planes using the generated reference sub-plane as a reference plane.

FIG. 7

```
              ┌─────────┐
              │  START  │
              └─────────┘
                   │
   ┌───────────────────────────────────┐
   │  DIVIDE INPUT VIDEO INTO PLURALITY │ ── 710
   │   OF SUB-PLANES A, B, C, AND D     │
   └───────────────────────────────────┘
                   │
   ┌───────────────────────────────────┐
   │   GENERATE REFERENCE SUB-PLANE     │ ── 720
   │    BASED ON DIVIDED SUB-PLANES     │
   └───────────────────────────────────┘
                   │
   ┌───────────────────────────────────┐
   │   PERFORM INTRAPREDICTION ENCODING │ ── 730
   │      ON REFERENCE SUB-PLANE S      │
   └───────────────────────────────────┘
                   │
   ┌───────────────────────────────────┐
   │   PERFORM INTERPREDICTION ON DIVIDED│ ── 740
   │ SUB-PLANES A, B, C, AND D USING REFERENCE│
   │   SUB-PLANE S AS REFERENCE PLANE   │
   └───────────────────────────────────┘
                   │
   ┌───────────────────────────────────┐
   │    COMPARE COSTS OF INTERPREDICTED │ ── 750
   │  SUB-PLANES AND SELECT PREDETERMINED│
   │  SUB-PLANE BASED ON COMPARISON RESULT│
   └───────────────────────────────────┘
                   │
   ┌───────────────────────────────────┐
   │ GENERATE BITSTREAM INCLUDING REMAINING│ ── 760
   │  SUB-PLANES AND REFERENCE SUB-PLANE│
   │  S EXCEPT FOR SELECTED SUB-PLANE   │
   └───────────────────────────────────┘
                   │
              ┌─────────┐
              │   END   │
              └─────────┘
```

EP 1 773 069 A2

**Description**

The present invention relates to apparatus and methods for video compression encoding/decoding and recording media.

In well-known video compression standards such as moving picture expert group (MPEG)-1, MPEG-2, MPEG-4 Visual, H.261, H.263, and H.264, a picture is generally divided into macroblocks for video encoding. In the case of H.264 encoders, after each of the macroblocks is encoded in all encoding modes available in interprediction and intraprediction, bit rates required for encoding of a macroblock and rate-distortion (RD) costs between the original macroblock and a decoded macroblock in encoding modes are compared. Then an appropriate encoding mode is selected according to the result of the comparison and the macroblock is encoded in the selected encoding mode. In intraprediction, a prediction value of a macroblock to be encoded is calculated using a pixel value of a pixel that is spatially adjacent to the macroblock to be encoded and a difference between the prediction value and the pixel value is encoded, instead of referring to reference pictures, in order to encode macroblocks of a current picture.

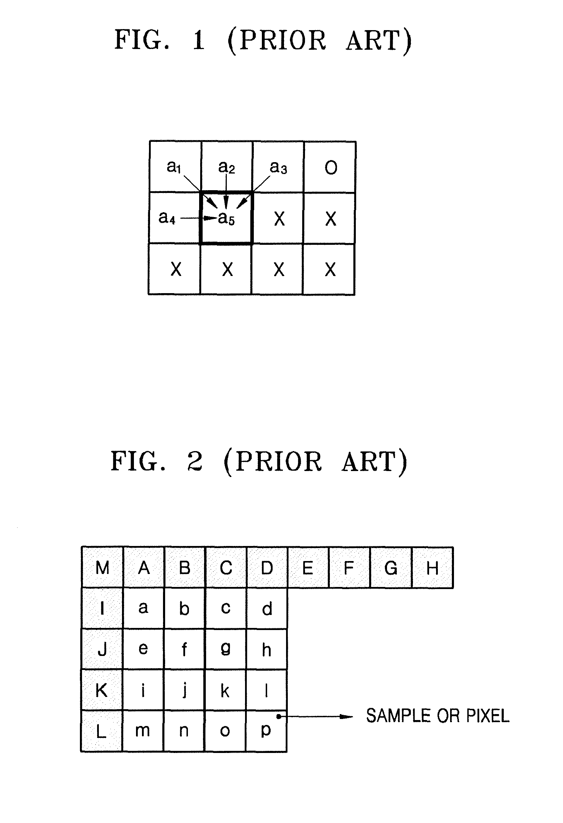

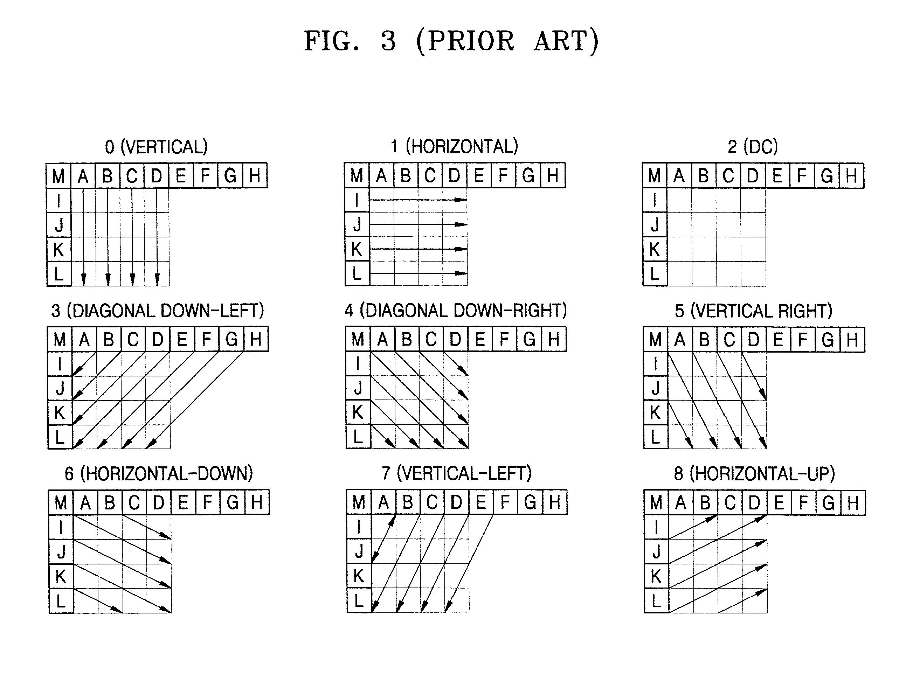

FIG. 1 illustrates previous macroblocks used for intraprediction of a current macroblock $a_5$ according to prior art.

Referring to FIG. 1, previous macroblocks $a_1$, $a_2$, $a_3$, and $a_4$ are used for intraprediction of a current macroblock $a_5$. According to a raster scan scheme, macroblocks included in a picture are scanned left-to-right and top-to-bottom. Thus, the previous macroblocks $a_1$, $a_2$, $a_3$, and $a_4$ are already scanned and encoded before the current macroblock $a_5$.

Because macroblocks marked with X have not been encoded, they cannot be used for predictive encoding of the current macroblock $a_5$. Because macroblocks marked with O have low correlation with the current macroblock $a_5$, they are not used for predictive encoding of the current macroblock $a_5$. After being discrete cosine transformed (DCT) and quantized, the previous macroblocks $a_1$, $a_2$, $a_3$, and $a_4$ are inversely quantized and inversely discrete cosine transformed and are then reconstructed.

FIG. 2 is a reference diagram for explaining adjacent pixels used in intra $4 \times 4$ modes of H.264 according to prior art.

Referring to FIG. 2, lower-case letters a through p indicate pixels of a $4 \times 4$ block to be predicted, and upper-case letters A through M located above and on the left side of the $4 \times 4$ block indicate neighboring samples or pixels required for intraprediction of the $4 \times 4$ block, which have been already encoded and reconstructed.

FIG. 3 illustrates intra $4 \times 4$ modes used in H.264 according to prior art.

Referring to FIG. 3, the intra $4 \times 4$ modes include a total of 9 prediction modes, i.e., a direct current (DC) mode, a vertical mode, a horizontal mode, a diagonal down-left mode, a diagonal down-right mode, a vertical left mode, a vertical right mode, a horizontal up mode, and a horizontal down mode. In the intra $4 \times 4$ modes, pixel values of pixels a through p are predicted from pixels A through M of adjacent macroblocks. In encoders, compression efficiency varies with an encoding mode selected for intraprediction. To select the optimal encoding mode, prediction of a block is performed in all possible encoding modes, costs are calculated using a predetermined cost function in the encoding modes, and an encoding mode having the smallest cost is selected for encoding.

However, there still is a need for an encoding method capable of improving compression efficiency to provide high-quality video to users.

Preferred embodiments of the present invention aim to provide an apparatus and a method for video encoding and decoding to improve compression efficiency in conventional intraprediction of an intra picture.

According to one aspect of the present invention, there is provided a video encoding method including dividing an input video into a plurality of sub-planes, generating a reference sub-plane based on the divided sub-planes, performing intraprediction on the generated reference sub-plane, and performing interprediction on the divided sub-planes using the generated reference sub-plane as a reference plane.

The reference sub-plane may be generated by obtaining an average value of pixels of at least two of the divided sub-planes and using the obtained average value as a pixel value at a corresponding position in the reference sub-plane.

The reference sub-plane may be obtained by obtaining an average value of pixels of the divided sub-planes and using the obtained average value as a pixel value at a corresponding position in the reference sub-plane.

The dividing of the input video may include sub-sampling the input video.

The performing of the interprediction may include comparing costs of the interpredicted sub-planes and selecting one of the interpredicted sub-planes based on the comparison result.

The comparison of the costs may be performed by comparing the amount of bits of interprediction values of the interpredicted sub-planes.

The video encoding method may further include generating a bitstream, wherein the bitstream includes video data with respect to the interpredicted sub-planes except for the selected sub-plane and video data with respect to the intrapredicted reference sub-plane.

The video encoding method may further include performing transformation and quantization on the intrapredicted reference sub-plane and the interpredicted sub-planes except for the selected sub-plane and constructing a bitstream including the transformed and quantized sub-planes.

The input video may be a picture.

According to another aspect of the present invention, there is provided a video encoder including a video division unit, a reference sub-plane generation unit, and a sub-plane encoding unit. The video division unit divides an input video into a plurality of sub-planes. The reference sub-plane generation unit generates a reference sub-plane based on the divided sub-planes. The sub-plane encoding unit performs intraprediction on the generated reference sub-plane and performs interprediction on the divided sub-planes using the generated reference sub-plane as a reference plane.

According to still another aspect of the present invention, there is provided a video decoding method including receiving an encoded bitstream including video data obtained by performing interprediction on a plurality of sub-planes divided from an input video with reference to a reference sub-plane generated based on the divided sub-planes and video data obtained by performing intraprediction on the reference sub-plane, extracting the video data from the received bitstream, performing intraprediction decoding on the reference sub-plane of the extracted video data, and performing interprediction decoding on the interpredicted sub-planes by referring to the intraprediction decoded reference sub-plane.

One of the interpredicted sub-planes, which is selected according to a predetermined criterion, may not be included in the bitstream, and the video decoding method may further include reconstructing the selected sub-plane based on the intraprediction decoded reference sub-plane and the interprediction decoded sub-planes.

The video decoding method may further include reconstructing the input video based on the reconstructed sub-plane and the interprediction decoded sub-planes.

The video data included in the bitstream may further include performing inverse transformation and inverse quantization on the extracted video data.

According to still another aspect of the present invention, there is provided a video decoder including a video data extraction unit and a sub-plane decoding unit. The video data extraction unit extracts video data from an encoded bitstream including video data obtained by performing interprediction on a plurality of sub-planes divided from an input video with reference to a reference sub-plane generated based on the divided sub-planes and video data obtained by performing intraprediction encoding on the reference sub-plane. The sub-plane decoding unit performs intraprediction decoding on the reference sub-plane of the extracted video data and performs interprediction decoding on the interpredicted sub-planes by referring to the intraprediction decoded reference sub-plane.

According to yet another aspect of the present invention, there is provided a computer-readable recording medium having recorded thereon a program for a video encoding method including dividing an input video into a plurality of sub-planes, generating a reference sub-plane based on the divided sub-planes, performing intraprediction on the generated reference sub-plane, and performing interprediction on the divided sub-planes using the generated reference sub-plane as a reference plane.

According to yet another aspect of the present invention, there is provided a computer-readable recording medium having recorded thereon a program for a video decoding method including receiving an encoded bitstream including video data obtained by performing interprediction on a plurality of sub-planes divided from an input video with reference to a reference sub-plane generated based on the divided sub-planes and video data obtained by performing intraprediction on the reference sub-plane, extracting the video data from the received bitstream, performing intraprediction decoding on the reference sub-plane of the extracted video data, and performing interprediction decoding on the interpredicted sub-planes by referring to the intraprediction decoded reference sub-plane.

The above and other aspects of the present invention will become more apparent by describing in detail an exemplary embodiment thereof with reference to the attached drawings, in which:

FIG. 1 illustrates previous macroblocks used for the intraprediction of a current macroblock according to prior art;
FIG. 2 is a reference diagram for explaining adjacent pixels used in intra $4 \times 4$ modes of H.264 according to prior art;
FIG. 3 illustrates intra $4 \times 4$ modes used in H.264 according to prior art;
FIG. 4 is a block diagram of a video encoder according to an exemplary embodiment of the present invention;
FIG. 5 is a view for explaining division of a video and generation of a reference sub-plane according to an exemplary embodiment of the present invention;
FIG. 6 is a view for explaining a video encoding process according to an exemplary embodiment of the present invention;
FIG. 7 is a flowchart illustrating a video encoding method according to an exemplary embodiment of the present invention;
FIG. 8 is a block diagram of a video decoder according to an exemplary embodiment of the present invention;
FIG. 9 is a view for explaining a video decoding process according to an exemplary embodiment of the present invention; and
FIG. 10 is flowchart illustrating a video decoding method according to an exemplary embodiment of the present invention.

**DETAILED DESCRIPTION OF EXEMPLARY EMBODIMENTS**

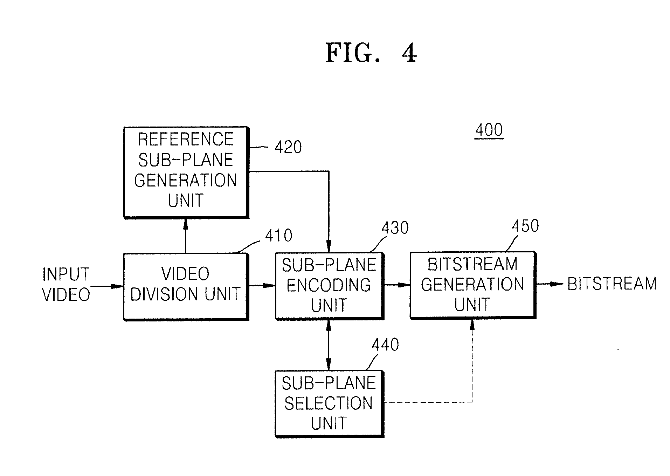

FIG. 4 is a block diagram of a video encoder 400 according to an exemplary embodiment of the present invention.

Referring to FIG. 4, the video encoder 400 includes a video division unit 410, a reference sub-plane generation unit 420, a sub-plane encoding unit 430, a sub-plane selection unit 440, and a bitstream generation unit 450. The sub-plane encoding unit 430 may further include an intraprediction unit and an interprediction unit (not shown). In addition, the sub-plane encoding unit 430 may further include a transformation unit (not shown) and a quantization unit (not shown) for performing transformation and quantization on sub-plane encoded video data.

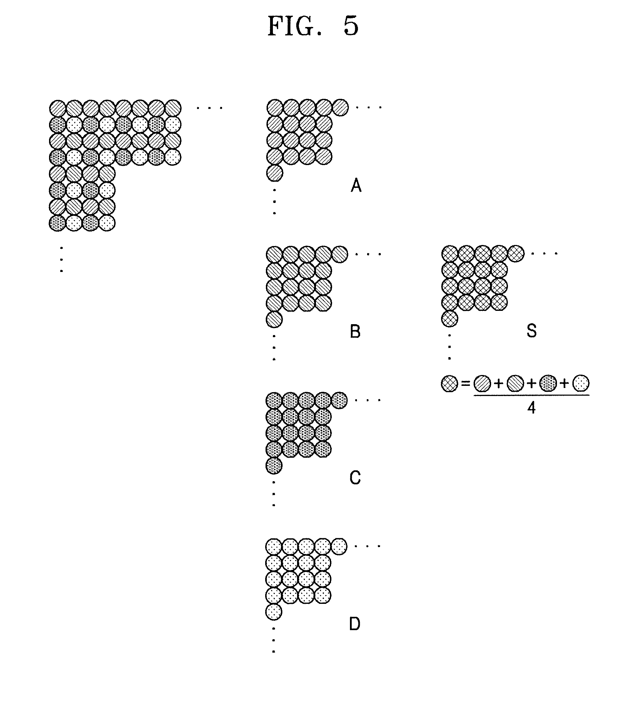

Hereinafter, the video encoder 400 according to an exemplary embodiment of the present invention will be described with reference to FIGS. 5 through 6.

The video division unit 410 divides an input video into a plurality of sub-planes, e.g., four sub-planes A, B, C, and D as illustrated in FIG. 5. For example, when an input video is in a common intermediate format (CIF) having a size of 352 × 288, it is divided into four 176 × 144 sub-planes.

While an input video is divided into four sub-planes in the current exemplary embodiment of the present invention for convenience of explanation, it may be divided into sub-planes of various sizes. While an input video is sub-sampled and divided into a plurality of sub-planes in the current exemplary embodiment of the present invention, it may be divided using other methods.

The reference sub-plane generation unit 420 generates a reference sub-plane based on the divided sub-planes. In the current exemplary embodiment of the present invention, a reference sub-plane S is generated from the divided sub-planes A, B, C, and D as illustrated in FIG. 5. In the current exemplary embodiment of the present invention, an average value of pixels at the same positions in the divided sub-planes A, B, C, and D is obtained as follows and the obtained average value is used as a pixel value at the same position in the reference sub-plane S.

$$S = (A + B + C + D) / 4 \quad\quad\ldots\ldots\ldots\ldots\ldots\ldots\ldots\ldots\ldots\ldots\ldots\ldots (1)$$

The reference sub-plane S may also be generated by a linear expression using the four sub-planes A, B, C, and D as follows:

$$S = a \times A + b \times B + c \times C + d \times D \quad\quad\ldots\ldots\ldots\ldots\ldots\ldots\ldots\ldots\ldots\ldots(2)$$

where, a, b, c, and d are real numbers.

The intraprediction unit (not shown) of the sub-plane encoding unit 430 performs intraprediction encoding on the reference sub-plane S generated by the reference sub-plane generation unit 420. Intraprediction encoding may be performed according to a conventional intraprediction method and a detailed description thereof will not be provided.

The interprediction unit (not shown) of the sub-plane encoding unit 430 performs interprediction on the divided sub-planes A, B, C, and D using the reference sub-plane S as a reference plane. Interprediction encoding may be performed according to a conventional interprediction method and a detailed description thereof will not be provided.

The sub-plane selection unit 440 compares costs of the interpredicted sub-planes, selects one having the largest cost, and transmits selection information indicating the selected sub-plane to the sub-plane encoding unit 430 or the bitstream generation unit 450 according to an exemplary embodiment of the present invention.

In the current exemplary embodiment of the present invention, the selection information is transmitted to the bitstream generation unit 450. For example, when the cost of the sub-plane C among the sub-planes A, B, C, and D is largest, selection information specifying the sub-plane C is transmitted to the bitstream generation unit 450.

Here, a cost can be calculated using various methods. For example, cost functions such as a sum of absolute difference (SAD) cost function, a sum of absolute transformed difference (SATD) cost function, a sum of square difference (SSD) cost function, a mean of absolute difference (MAD) cost function, and a Lagrange cost function may be used.

The bitstream generation unit 450 constructs a bitstream for the input video only with the reference sub-plane S and the sub-planes A, B, and D based on the transmitted selection information. Since the sub-plane C having lowest compression rate is not transmitted, overall compression rate can be improved. In construction of a bitstream, mode information indicating a sub-plane encoding method, e.g., the size of a divided sub-plane, information specifying a sub-plane to be transmitted, and transformation and quantization methods may be included in a picture header.

When the video encoder 400 includes a transformation unit and a quantization unit, the sub-plane selection unit 440 may transmit the selection information indicating the selected sub-plane to the sub-plane encoding unit 430 not to perform transformation and quantization on the selected sub-plane.

When the video encoder 400 includes a transformation unit and a quantization unit, a reference sub-plane reconstruction unit (not shown) may be included to perform inverse transformation, inverse quantization, and intraprediction decoding on a quantized reference sub-plane, and interprediction encoding of divided sub-planes may be performed with reference to the reconstructed reference sub-plane.

In the video encoder 400 according to an exemplary embodiment of the present invention, by performing interprediction encoding using the reference sub-plane S obtained by averaging the divided sub-planes, degradation of compression rate due to interruption of continuity of the original video can be prevented. In addition, since similarity between a sub-plane to be encoded and a reference sub-plane is improved, degradation in performance caused by interruption of horizontal or vertical continuity between sub-planes to be interpredicted can be prevented.

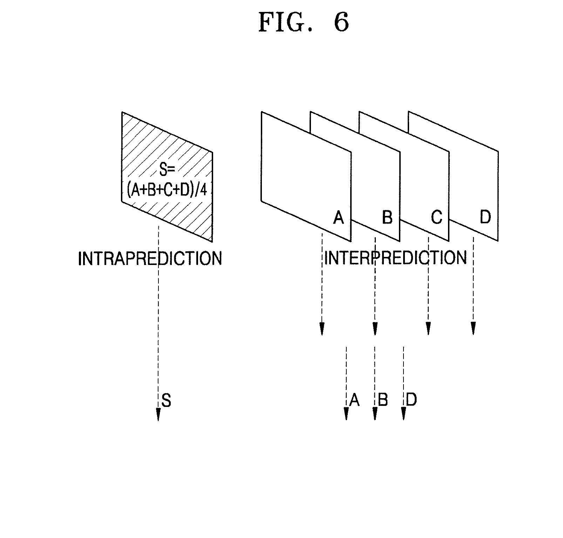

FIG. 6 is a view for explaining a video encoding process performed by the reference sub-plane generation unit 420, the sub-plane encoding unit 430, the sub-plane selection unit 440, and the bitstream generation unit 450 of the video encoder 400 according to an exemplary embodiment of the present invention. In FIG. 6, after the reference sub-plane S is generated from the sub-planes A, B, C, and D and interprediction is performed on the sub-planes A, B, C, and D based on the generated reference sub-plane S, only the sub-planes A, B, and D and the reference sub-plane S except for the sub-plane C having the largest amount of bits are compressed into single picture data and then transmitted.

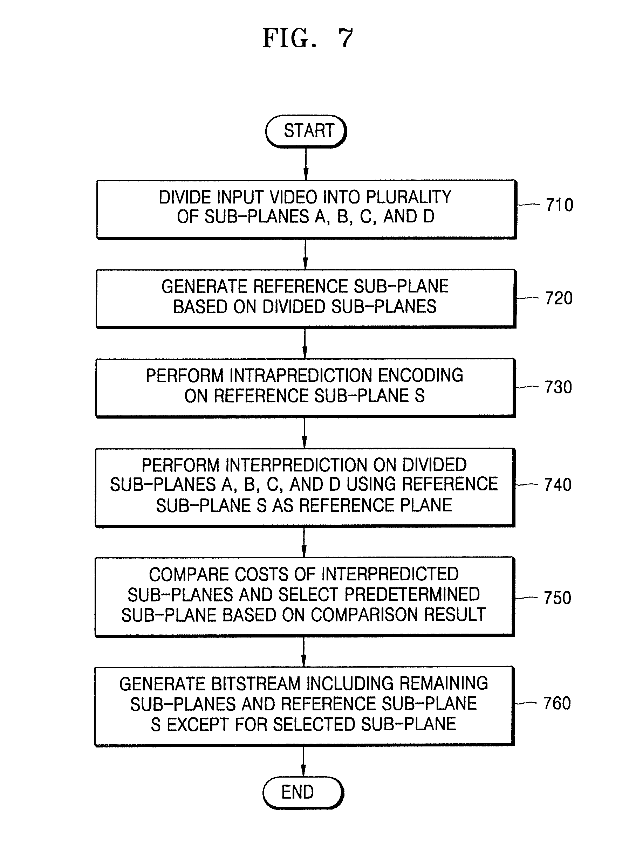

FIG. 7 is a flowchart illustrating a video encoding method performed by the video encoder 400 of FIG. 4 according to an exemplary embodiment of the present invention.

In operation 710, an input video is divided into a plurality of sub-planes, e.g., four sub-planes A, B, C, and D as illustrated in FIG. 5.

In operation 720, a reference sub-plane is generated based on the divided sub-planes. For example, as in FIG. 5 and Equation 1, an average value of pixels at the same positions in the divided sub-planes A, B, C, and D is obtained and the obtained average value is used as a pixel value at the same position in the reference sub-plane S.

In operation 730, intraprediction encoding is performed on the reference sub-plane S generated in operation 720.

In operation 740, interprediction is performed on the divided sub-planes using the reference sub-plane as a reference plane.

In operation 750, costs of the interpredicted sub-planes are compared and one having the largest cost is selected. In the current exemplary embodiment of the present invention, it is assumed that an interprediction value of the sub-plane C has the largest cost.

In operation 760, a bitstream including the sub-planes A, B, and D and the reference sub-plane S except for the selected sub-plane C is constructed. As such, since a sub-plane having lowest compression rate is not transmitted, overall compression rate can be improved. In construction of a bitstream, mode information indicating a sub-plane encoding method, e.g., the size of a divided sub-plane, information specifying a sub-plane to be transmitted, and transformation and quantization methods may be included in a picture header.

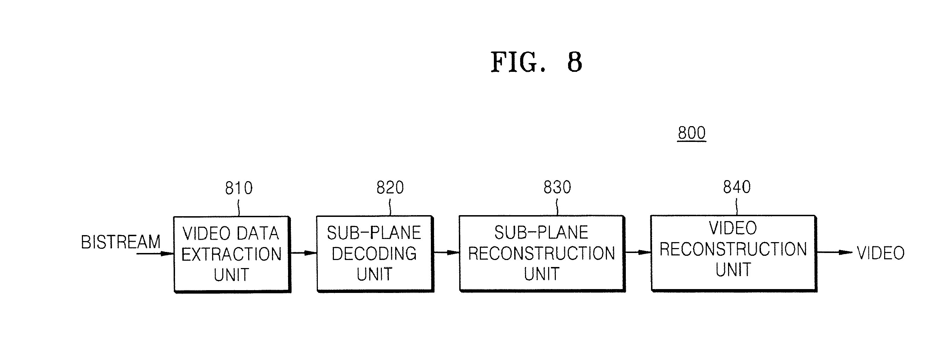

FIG. 8 is a block diagram of a video decoder 800 according to an exemplary embodiment of the present invention.

The video decoder 800 includes a video data extraction unit 810, a sub-plane decoding unit 820, a sub-plane reconstruction unit 830, and a video reconstruction unit 840. The sub-plane decoding unit 820 may further include an intraprediction unit (not shown) and an interprediction unit (not shown). The sub-plane decoding unit 820 may also further include an inverse quantization unit (not shown) and an inverse transformation unit (not shown).

The video data extraction unit 810 receives an encoded bitstream to extract video data from the received bitstream and transmits the extracted video data to the sub-plane decoding unit 820. When mode information indicating an encoding method, e.g., a sub-plane division method, intraprediction and interprediction methods, and a scan mode is included in a picture header of the encoded bitstream, the picture header is parsed to extract the mode information.

In the current exemplary embodiment of the present invention, video data with respect to the reference sub-plane S and the sub-planes A, B, and D is included in the encoded bitstream.

The intraprediction unit of the sub-plane decoding unit 820 performs intraprediction decoding on the reference sub-plane included in the extracted video data.

The interprediction unit of the sub-plane decoding unit 820 performs interprediction decoding by referring to the intraprediction decoded reference sub-plane. When the mode information is included in the picture header of the received bitstream, intraprediction decoding and interprediction decoding are performed based on the mode information.

The sub-plane reconstruction unit 830 reconstructs the sub-plane C based on the intraprediction decoded reference sub-plane S and the interprediction decoded sub-planes A, B, and D as follows:

$$C = 4 \times S - (A + B + D) \qquad \ldots\ldots\ldots\ldots\ldots\ldots\ldots\ldots\ldots\ (3)$$

The video reconstruction unit 840 reconstructs the original video using the sub-planes A, B, and D decoded by the sub-plane decoding unit 820 and the sub-plane C reconstructed by the sub-plane reconstruction unit 830.

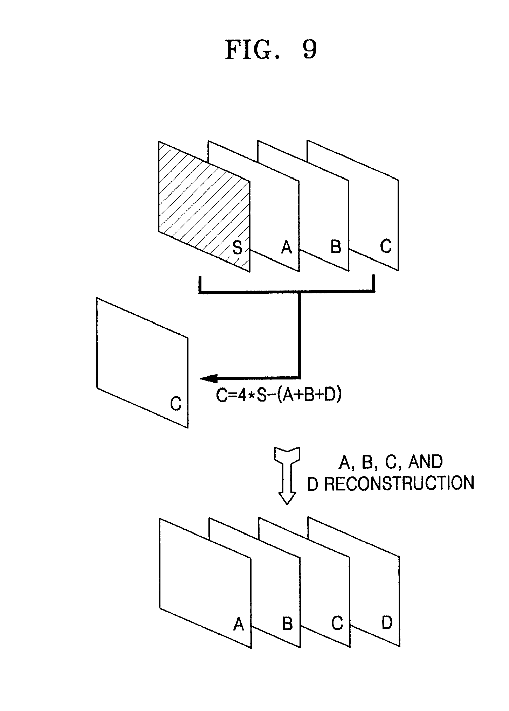

FIG. 9 is a view for explaining a video decoding process performed by the sub-plane decoding unit 820 and the sub-plane reconstruction unit 840 of the video decoder of FIG. 8.

In FIG. 9, video data extracted from a received bitstream is decoded to construct the reference sub-plane S and the sub-planes A, B, and D and the sub-plane C is reconstructed from the constructed reference sub-plane S and sub-planes A, B, and D.

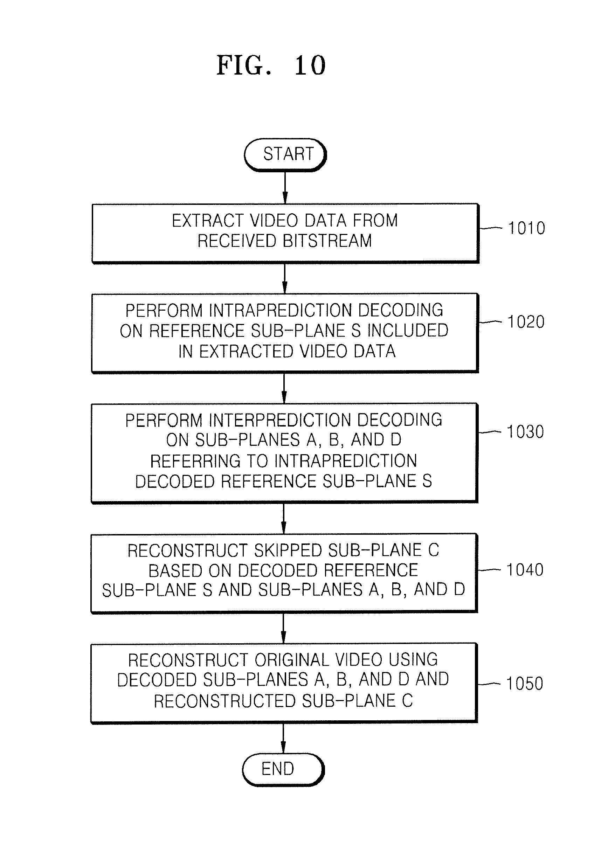

FIG. 10 is a flowchart illustrating a video decoding method performed by the video decoder 800 of FIG. 8.

In operation 1010, an encoded bitstream is received to extract video data. The received encoded bitstream includes video data obtained by performing interprediction on a plurality of sub-planes divided from an input video with reference to a reference sub-plane generated based on the divided sub-planes and video data obtained by performing intraprediction encoding on the reference sub-plane. The video data obtained through interprediction does not include one of the divided sub-planes, which is selected according to a predetermined criterion. When mode information indicating an encoding method is included in a picture header of the encoded bitstream, the picture header is parsed to extract the mode information.

In operation 1020, intraprediction decoding is performed on the reference sub-plane included in the extracted video data. In the current exemplary embodiment of the present invention, it is assumed that video data with respect to the reference sub-plane S and the sub-planes A, B, and D is included in the received encoded bitstream. In other words, in operation 1020, the reference sub-plane S is decoded.

In operation 1030, interprediction decoding is performed on the extracted interpredicted sub-planes with reference to the intraprediction decoded reference sub-plane. In other words, the sub-planes A, B, and D are decoded.

In operation 1040, the sub-plane C is reconstructed based on the reconstructed reference sub-plane S and sub-planes A, B, and D.

In operation 1050, the original video is reconstructed using the decoded sub-planes A, B, and D and the reconstructed sub-plane C.

As described above, according to exemplary embodiments of the present invention, an input video is divided into a plurality of sub-planes and interprediction encoding is performed using a reference sub-plane obtained by averaging the divided sub-planes, thereby maintaining continuity of the original video and thus improving compression rate even when the input video is divided.

Moreover, since an input video is divided into a plurality of sub-planes and interprediction encoding is performed using a reference sub-plane obtained by averaging the divided sub-planes, similarity between a sub-plane to be encoded and the reference sub-plane is increased, thereby maintaining horizontal or vertical continuity between sub-planes to be interpredicted and thus improving compression rate.

Furthermore, an input video is divided into a plurality of sub-planes, one of the sub-planes having lowest compression rate is not transmitted, and the original video is reconstructed only with the transmitted sub-planes, thereby improving compression rate.

Meanwhile, the present invention can also be embodied as a computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (e.g., transmission over the Internet). The computer-readable recording medium can also be distributed over network coupled computer systems so that the computer-readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A video encoding method comprising:

    dividing an input video into a plurality of sub-planes;
    generating a reference sub-plane based on the divided sub-planes;
    performing intraprediction on the generated reference sub-plane; and
    performing interprediction on the divided sub-planes using the generated reference sub-plane as a reference plane.

2. The video encoding method of claim 1, wherein the reference sub-plane is generated by obtaining an average value of pixels of at least two of the divided sub-planes and using the obtained average value as a pixel value at a corresponding position in the reference sub-plane.

3. The video encoding method of claim 1, wherein the dividing of the input video comprises sub-sampling the input video.

4. The video encoding method of claim 1 or claim 2, wherein the performing of the interprediction comprises:

    comparing costs of the interpredicted sub-planes; and
    selecting one of the interpredicted sub-planes based on a comparison result.

5. The video encoding method of any preceding claim, wherein the comparison of the costs is performed by comparing amounts of bits of interprediction values of the interpredicted sub-planes.

6. The video encoding method of claim 5, wherein the selected sub-plane has a lowest cost among the interpredicted sub-planes.

7. The video encoding method of any one of claims 4 - 6, further comprising generating a bitstream, wherein the bitstream comprises video data with respect to the interpredicted sub-planes except for the selected sub-plane and video data with respect to the intrapredicted reference sub-plane.

8. The video encoding method of any one of claims 4 - 7, further comprising:

    performing transformation and quantization on the intrapredicted reference sub-plane and the interpredicted sub-planes except for the selected sub-plane; and
    constructing a bitstream comprising the transformed and quantized sub-planes.

9. The video encoding method of claim 8, wherein the bitstream comprises at least one of a size of each of the divided sub-planes, information specifying which sub-planes are to be encoded, a method of the transformation and a method of the quantization.

10. The video encoding method of any precieding claim, wherein the input video is a picture.

11. A video encoder (400) comprising:

    a video division unit (410) which divides an input video into a plurality of sub-planes;
    a reference sub-plane generation unit (420) which generates a reference sub-plane based on the divided sub-planes;
    a sub-plane encoding unit (430) which performs intraprediction on the generated reference sub-plane and performs interprediction on the divided sub-planes using the generated reference sub-plane as a reference plane.

12. The video encoder (400) of claim 11, wherein the reference sub-plane is generated by obtaining an average value of pixels of at least two of the divided sub-planes and using the obtained average value as a pixel value at a corresponding position in the reference sub-plane.

13. The video encoder (400) of claim 11 or claim 12, further comprising a sub-plane selection unit (440) which compares costs of the interpredicted sub-planes and selects one of the interpredicted sub-planes based on a comparison result.

**14.** The video encoder (400) of claim 11, further comprising a bitstream generation unit (450) which generates a bitstream comprising video data with respect to the interpredicted sub-planes except for the selected sub-plane and video data with respect to the intrapredicted reference sub-plane.

**15.** A video decoding method comprising:

receiving an encoded bitstream comprising video data obtained by performing interprediction on a plurality of sub-planes divided from an input video with reference to a reference sub-plane generated based on the divided sub-planes, and video data obtained by performing intraprediction on the reference sub-plane;

extracting the video data from the received bitstream;

performing intraprediction decoding on the reference sub-plane of the extracted video data; and

performing interprediction decoding on the interpredicted sub-planes by referring to the intraprediction decoded reference sub-plane.

**16.** The video decoding method of claim 15, further comprising reconstructing a selected sub-plane based on the intraprediction decoded reference sub-plane and the interprediction decoded sub-planes, wherein the selected sub-plane is not included in the encoded bitstream.

**17.** The video decoding method of claim 16, further comprising reconstructing the input video based on the reconstructed selected sub-plane and the interprediction decoded sub-planes.

**18.** The video decoding method of any one of claims 15 - 17, wherein at least one of the divided sub-planes is obtained by sub-sampling the input video in a predetermined size.

**19.** The video decoding method of any one of claims 15 - 18, wherein the input is a picture.

**20.** The video decoding method of any one of claims 15 - 19, further comprising performing inverse transformation and inverse quantization on the extracted video data.

**21.** A video decoder (800) comprising:

a video data extraction unit (810) which extracts video data from an encoded bitstream comprising video data obtained by performing interprediction on a plurality of sub-planes divided from an input video with reference to a reference sub-plane generated based on the divided sub-planes, and video data obtained by performing intraprediction on the reference sub-plane; and

a sub-plane decoding unit (820) which performs intraprediction decoding on the reference sub-plane of the extracted video data and performs interprediction decoding on the interpredicted sub-planes by referring to the intraprediction decoded reference sub-plane.

**22.** The video decoder (800) of claim 21, further comprising a sub-plane reconstruction unit (830) which reconstructs a selected sub-plane based on the intraprediction decoded reference sub-plane and the interprediction decoded sub-planes, wherein the selected sub-plane is not included in the encoded bitstream.

**23.** The video decoder (800) of claim 22, further comprising a video reconstruction unit (840) which reconstructs the input video based on the reconstructed selected sub-plane and the interprediction decoded sub-planes.

**24.** A computer-readable recording medium having recorded thereon a program for a video encoding method comprising:

dividing an input video into a plurality of sub-planes;

generating a reference sub-plane based on the divided sub-planes;

performing intraprediction on the generated reference sub-plane; and

performing interprediction on the divided sub-planes using the generated reference sub-plane as a reference plane.

**25.** A computer-readable recording medium having recorded thereon a program for a video decoding method comprising:

receiving an encoded bitstream comprising video data obtained by performing interprediction on a plurality of sub-planes divided from an input video with reference to a reference sub-plane generated based on the divided sub-planes, and video data obtained by performing intraprediction on the reference sub-plane;
extracting the video data from the received bitstream;
performing intraprediction decoding on the reference sub-plane of the extracted video data; and
performing interprediction decoding on the interpredicted sub-planes by referring to the intraprediction decoded reference sub-plane.

# FIG. 1 (PRIOR ART)

# FIG. 2 (PRIOR ART)

SAMPLE OR PIXEL

# FIG. 3 (PRIOR ART)

EP 1 773 069 A2

0 (VERTICAL)

1 (HORIZONTAL)

2 (DC)

3 (DIAGONAL DOWN-LEFT)

4 (DIAGONAL DOWN-RIGHT)

5 (VERTICAL RIGHT)

6 (HORIZONTAL-DOWN)

7 (VERTICAL-LEFT)

8 (HORIZONTAL-UP)

# FIG. 4

400

REFERENCE
SUB-PLANE
GENERATION
UNIT — 420

INPUT
VIDEO → VIDEO
DIVISION UNIT 410 → SUB-PLANE
ENCODING
UNIT 430 → BITSTREAM
GENERATION
UNIT 450 → BITSTREAM

SUB-PLANE
SELECTION
UNIT 440

# FIG. 5

A

B

S

$$\bigotimes = \frac{\bigoslash + \bigoslash + \bigoplus + \bigodot}{4}$$

C

D

# FIG. 6

S=
(A+B+C+D)/4

INTRAPREDICTION

A  B  C  D

INTERPREDICTION

S

A  B  D

# FIG. 7

START

DIVIDE INPUT VIDEO INTO PLURALITY OF SUB-PLANES A, B, C, AND D — 710

GENERATE REFERENCE SUB-PLANE BASED ON DIVIDED SUB-PLANES — 720

PERFORM INTRAPREDICTION ENCODING ON REFERENCE SUB-PLANE S — 730

PERFORM INTERPREDICTION ON DIVIDED SUB-PLANES A, B, C, AND D USING REFERENCE SUB-PLANE S AS REFERENCE PLANE — 740

COMPARE COSTS OF INTERPREDICTED SUB-PLANES AND SELECT PREDETERMINED SUB-PLANE BASED ON COMPARISON RESULT — 750

GENERATE BITSTREAM INCLUDING REMAINING SUB-PLANES AND REFERENCE SUB-PLANE S EXCEPT FOR SELECTED SUB-PLANE — 760

END

## FIG. 8

800

BISTREAM → | VIDEO DATA EXTRACTION UNIT (810) | → | SUB-PLANE DECODING UNIT (820) | → | SUB-PLANE RECONSTRUCTION UNIT (830) | → | VIDEO RECONSTRUCTION UNIT (840) | → VIDEO

# FIG. 9

$C=4*S-(A+B+D)$

A, B, C, AND
D RECONSTRUCTION

# FIG. 10

START

↓

EXTRACT VIDEO DATA FROM
RECEIVED BITSTREAM — 1010

↓

PERFORM INTRAPREDICTION DECODING
ON REFERENCE SUB-PLANE S INCLUDED
IN EXTRACTED VIDEO DATA — 1020

↓

PERFORM INTERPREDICTION DECODING
ON SUB-PLANES A, B, AND D
REFERRING TO INTRAPREDICTION
DECODED REFERENCE SUB-PLANE S — 1030

↓

RECONSTRUCT SKIPPED SUB-PLANE C
BASED ON DECODED REFERENCE
SUB-PLANE S AND SUB-PLANES A, B, AND D — 1040

↓

RECONSTRUCT ORIGINAL VIDEO USING
DECODED SUB-PLANES A, B, AND D AND
RECONSTRUCTED SUB-PLANE C — 1050

↓

END